# EUROPÄISCHE PATENTANMELDUNG

(11) **EP 4 748 507 A1**
(43) Veröffentlichungstag der Anmeldung: **27.05.2026**
(21) Anmeldenummer: 24214689.2
(22) Anmeldetag: 22.11.2024
(51) Int. Cl.: B21B 1/00

(54) **QUALITÄTSÜBERWACHUNG BEI DER METALLBANDPRODUKTION**

(71) Anmelder: Primetals Technologies Austria GmbH, 4031 Linz (AT)
(72) Erfinder: Seyerlehner, Klaus, 4020 Linz (AT); Zhai, Yuyou, 4060 Leonding (AT)
(74) Vertreter: Metals@Linz

(57) **Zusammenfassung**

Die vorliegende Erfindung betrifft ein Verfahren und eine Vorrichtung zur Überwachung einer Metallbandproduktion sowie eine Produktionslinie, insbesondere eine Gießwalzanlage. Es werden Oberflächendefekte (D) mehrerer während eines Produktionszyklus produzierten Metallbänder (12) oder entsprechender Vorprodukte (24) detektiert (S1), eine Defektstatistik (S) für diesen Produktionszyklus auf Grundlage der detektierten Oberflächendefekte (D) erzeugt (S2) und eine auf der erzeugten Defektstatistik (D) basierende Qualitätsinformation (I) ausgegeben (S4).

## Beschreibung

### Gebiet der Technik

Die vorliegende Erfindung betrifft ein Verfahren und eine Vorrichtung zur Überwachung einer Metallbandproduktion sowie eine Produktionslinie, insbesondere eine Gießwalzanlage.

### Stand der Technik

Es ist üblich, die Qualität von Metallbändern direkt bei deren Produktion oder auch bei einer Nachbearbeitung zu überwachen. Dazu kann insbesondere am Ende einer Produktionslinie, zum Beispiel stromabwärts einer oder mehrerer Walzgerüstgruppen, Entzunderungsvorrichtungen, Erwärmungsvorrichtungen und/oder Kühlstrecken, das Metallband oder das entsprechende Vorprodukt sensorisch erfasst und aus den so gewonnenen Sensordaten auf eine Bandqualität geschlossen werden. Hierfür gibt es insbesondere dedizierte Oberflächeninspektionsgeräte, die jedes Metallband gesondert erfassen und zum Beispiel Oberflächendefekte auf dem Metallband oder seinem Vorprodukt erkennen können. Mit solchen Oberflächeninspektionsgeräten lässt sich, bei entsprechender Anordnung der Oberflächeninspektionsgeräte, grundsätzlich nach jedem Produktionsschritt der Zustand des Metallbands oder des Vorprodukts erfassen. Gegebenenfalls können diese Oberflächeninspektionsgeräte auch dazu eingerichtet sein, die erkannten Oberflächendefekte automatisch zu klassifizieren. Werden besonders viele oder besonders schwerwiegende Defekte auf diese Weise erkannt, können eine Produktion gestoppt oder Produktionsparameter geändert werden, um die Qualität der produzierten Metallbänder auf ein gewünschtes Maß zu erhöhen oder auf einem gewünschten Maß zu halten.

### Zusammenfassung der Erfindung

Es ist eine Aufgabe der vorliegenden Erfindung, eine verbesserte Qualitätsüberwachung bei der Produktion von Metallbändern bereitzustellen, insbesondere auch eine schleichende Qualitätsminderung über einen langen Zeitraum möglichst frühzeitig erkennen zu können.

Diese Aufgabe wird gelöst durch ein Verfahren und eine Vorrichtung zur Überwachung einer Metallbandproduktion sowie eine Produktionslinie gemäß den unabhängigen Ansprüchen.

Bevorzugte Ausführungsformen sind Gegenstand der abhängigen Ansprüche sowie der folgenden Beschreibung.

Gemäß einem ersten Aspekt der Erfindung werden bei dem, insbesondere zumindest teilweise computerimplementierten, Verfahren zur Überwachung einer Metallbandproduktion folgende Schritte durchgeführt: i) Detektieren von Oberflächendefekten auf mehreren während eines Produktionszyklus, insbesondere aufeinanderfolgend, produzierten Metallbändern oder deren Vorprodukten, insbesondere während der laufenden Produktion; ii) Erzeugen einer Defektstatistik für diesen Produktionszyklus auf Grundlage der, vorzugsweise aller, detektierten Oberflächendefekte; und iii) Ausgeben einer auf der erzeugten Defektstatistik basierenden Qualitätsinformation.

Ein Produktionszyklus im Sinne der Erfindung ist vorzugsweise durch eine vorbestimmte Anzahl an produzierten Metallbändern, gegebenenfalls auch in unterschiedlichen Formaten und/oder mit Dicken, oder einen vorbestimmten Zeitraum definiert. Alternativ kann ein Produktionszyklus auch durch die Menge an eingesetztem Material, als flüssigem Metall, definiert sein.

Unter einer Metallbandproduktion im Sinne der Erfindung ist vorzugsweise sowohl eine Metallbanderzeugung, z. B. mittels einer Gießanlage, einer Warmwalzanlage oder einer Gießwalzanlage, als auch eine Metallbandverarbeitung, z. B. mittels einer Beiz- und Veredelungsanlage - etwa einer Wärmebehandlungs-, Verzinkungs- oder Farbbeschichtungsanlage, zu verstehen. Die Oberflächendefekte können grundsätzlich also nach jedem Prozessschritt in einem Be-oder Verarbeitungsverfahren für ein Metallband detektiert werden.

Ein Aspekt der Erfindung beruht auf dem Ansatz, Oberflächendefekte nicht mehr nur für jedes produzierte Metallband oder dessen Vorprodukt einzeln und unabhängig von zuvor und/oder danach produzierten Metallbändern bzw. Vorprodukten zu detektieren und auszuwerten, sondern eine Defektstatistik über einen ganzen Produktionszyklus zu erstellen und auszuwerten. Mit diesem Verfahren lässt sich die Qualitätsüberwachung zuverlässig automatisieren. Beispielsweise kann eine auf der erzeugten Defektstatistik basierende Qualitätsinformation, etwa ein auf Grundlage der Defektstatistik ermitteltes Maß für die Oberflächenqualität der zuletzt hergestellten Metallbänder oder die Defektstatistik als solche, bereitgestellt werden, die sich dann einer Steuerung der Metallbandproduktion zugrunde legen lässt. Zudem erlaubt eine statistische Auswertung der über eine Mehrzahl von produzierten Metallbändern oder Vorprodukten detektierten Oberflächendefekte eine signifikant zuverlässigere Aussage über die (Oberflächen-) Qualität der im Rahmen des Produktionszyklus produzierten Metallbänder. Außerdem kann auch eine zeitliche Entwicklung der Defektstatistik überwacht werden. Dies erlaubt gegebenenfalls das Registrieren einer langsamen, über einen längeren Zeitraum auftretenden Qualitätsänderung, die beim separaten Betrachten einzelner Metallbänder bzw. Vorprodukte gar nicht sichtbar ist. So lässt sich die Metallbandproduktion auch dauerhaft überwachen.

Die Defektstatistik wird dabei zweckmäßigerweise wiederholt, z. B. periodisch, neu erzeugt. Die Defektstatistik kann etwa für aufeinanderfolgende Produktionszyklen immer wieder neu erzeugt werden. Alternativ kann es aber auch vorteilhaft sein, die Defektstatistik wiederholt für einen Produktionszyklus, der ausgehend vom gegenwärtig produzierten Metallband eine vorbestimmte Anzahl an zuvor produzierten Metallbändern oder einen vorbestimmten Zeitraum umfasst, zu ermitteln. Beispielsweise kann so für jedes neu erzeugte Metallband oder Vorprodukt die Statistik erneut berechnet oder aktualisiert werden. Nur durch eine solche wiederholt neu erzeugte Defektstatistik kann gegebenenfalls ein schleichender Trend in der Qualität, zum Beispiel die Zu- oder Abnahme von Defekten, erkannt werden. So lässt sich eventuell auch die unnötige Produktion einer Vielzahl von fehlerhaften Bändern vermeiden, d. h. es kann frühzeitig in den Produktionsprozess eingegriffen und dieser korrigiert werden.

Die Oberflächendefekte werden dabei vorzugsweise optisch detektiert, etwa durch die Aufnahme von Bildern der Bandoberfläche mit einer Kamera und die anschließende Auswertung oder Verarbeitung dieser Bilder durch einen entsprechenden Algorithmus. Dabei können die Defekte klassifiziert und/oder auf jedem einzelnen Metallband verortet werden. Alternativ oder zusätzlich zur Klassifikation können die Oberflächendefekte also auch lokalisiert, ihnen also eine Position auf dem jeweilig untersuchten Metallband zugeordnet, werden. Zweckmäßigerweise wird so eine räumliche (zweidimensionale) Defektverteilung ermittelt. Die Defektstatistik wird dabei zweckmäßigerweise durch Zusammenfassung mehrerer solcher Defektverteilungen erzeugt.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

In einer bevorzugten Ausführungsform wird geprüft, ob die erzeugte Defektstatistik ein vorbestimmtes Kriterium erfüllt. Es kann beispielsweise geprüft werden, ob eine oder mehrere für die Defektstatistik charakteristische Größen, etwa ein oder mehrere aus der Defektstatistik abgeleitete statistische Momente, einen vorbestimmten Schwellenwert unterschreiten. Zweckmäßigerweise wird die Qualitätsinformation dann in Abhängigkeit eines Ergebnisses der Prüfung ausgegeben. So kann beispielsweise ein Warnsignal, welches auf eine mangelnde Oberflächenqualität hinweist, ausgegeben werden, wenn das Kriterium nicht erfüllt ist. Dadurch kann Bedienpersonal schon frühzeitig darauf hingewiesen werden, dass Maßnahmen zur Erhöhung der Oberflächenqualität zu ergreifen sind bzw. eine Fehlersuche für die Ursache der verschlechterten Oberflächenqualität stattfinden sollte.

In einer weiteren bevorzugten Ausführungsform wird für jedes der während des Produktionszyklus produzierten Metallbänder oder deren Vorprodukte auf Grundlage der jeweils detektierten Oberflächendefekte eine Defektverteilung ermittelt und aus diesen Defektverteilungen die Defektstatistik gebildet. Zweckmäßigerweise werden die Oberflächendefekte dabei für jedes der Metallbänder oder deren Vorprodukte ortsaufgelöst erfasst. Jedem detektierten Oberflächendefekt kann also eine Position auf dem jeweiligen Metallband oder Vorprodukt zugeordnet werden. Die Defektstatistik enthält dann zweckmäßigerweise eine Information über die Anzahl der Defekte pro Ort, d. h. pro Position auf dem Band. Effektiv kann so also eine ortsaufgelöste oder räumliche (zweidimensionale) Defektdichte erzeugt werden. Die Defektstatistik kann so eine Information liefern, wo am Band welche Defekte innerhalb des Produktionszyklus wie oft auftreten.

In einer weiteren bevorzugten Ausführungsform werden die ermittelten Defektverteilungen auf eine vorbestimmte Bandgröße normiert. Dadurch kann eine gute Vergleichbarkeit der einzelnen Defektstatistiken hergestellt werden. Zudem erlaubt die Defektstatistik dann entsprechend Aussagen über eine relative Defekthäufigkeit in Bezug auf Bandanfang ("Bandkopf"), Bandende ("Bandfuß") oder Bandränder.

Alternativ ist es aber auch denkbar, die Defektverteilungen ausgehend vom Bandanfang, Bandende oder der Bandmitte zu der Defektstatistik zu verrechnen. Dadurch kann die Defektstatistik eine absolute Aussage über die Defekthäufigkeit in Bezug auf Bandanfang, Bandende oder Bandmitte liefern.

In einer weiteren bevorzugten Ausführungsform umfasst der Produktionszyklus die Produktion von etwa 10 bis etwa 1000 Metallbändern. Dadurch kann eine ausreichende Statistik sichergestellt werden, was eine gesicherte Aussage bezüglich einer Qualitätsentwicklung erlaubt.

In einer weiteren bevorzugten Ausführungsform umfasst die erzeugte Defektstatistik eine räumliche Defektdichte. Zweckmäßigerweise wird dann im Rahmen der Prüfung geprüft, ob die Defektdichte einen vorbestimmten Schwellenwert an wenigstens einer Bandposition erreicht oder überschreitet. Es kann also geprüft werden, ob es einen Bereich auf den Metallbändern bzw. den Vorprodukten gibt, in dem über alle Bänder bzw. Vorprodukte zusammengenommen mehr Defekte, insbesondere einer vorbestimmten Kategorie, auftreten als zulässig. Somit lässt sich eine regelbasierte Überwachung der Metallbandproduktion hinsichtlich der Bandqualität erreichen. Basierend auf einem Ergebnis der Prüfung kann außerdem aktiv Kontrolle über die Defektverteilung ausgeübt werden, etwa indem anhand der Prüfung, ob die Defektdichte einen vorbestimmten Schwellenwert an wenigstens einem Ort erreicht oder überschreitet, Gegenmaßnahmen ergriffen werden, welche die Defektdichte an ebendiesem Ort beeinflusst.

In einer weiteren bevorzugten Ausführungsform wird die erzeugte Defektstatistik im Rahmen der Prüfung mit einer vorbestimmten Defektstatistik verglichen. Die vorbestimmte Defektstatistik ist dabei zweckmäßig eine über einen früheren Produktionszyklus erzeugte Defektstatistik. Die vorbestimmte Defektstatistik kann insbesondere mit einem Basis- oder Normalzustand der eingesetzten Produktionslinie korrespondieren. Die vorbestimmte Defektstatistik kann daher auch als Referenz- oder Ausgangsstatistik bezeichnet werden. Durch den Vergleich der erzeugten Defektstatistik mit der vorbestimmten Defektstatistik können bei der Überwachung der Metallbandqualität Eigenheiten oder eine spezielle Konfiguration der Anlage leichter berücksichtigt werden. Insofern die vorbestimmte Defektstatistik einer über einen früheren Produktionszyklus erzeugten Defektstatistik entspricht, kann dies einer automatischen Kalibration der Qualitätsüberwachung entsprechen.

In einer weiteren bevorzugten Ausführungsform wird die Qualitätsinformation in Abhängigkeit einer Abweichung der erzeugten Defektstatistik von der vorbestimmten Defektstatistik ausgegeben. Die Qualitätsinformation kann beispielsweise ausgegeben werden, wenn die Abweichung einen Schwellenwert erreicht oder überschreitet. Dadurch lässt sich eine Abweichung vom "Normalzustand", d. h. zum Beispiel einer erwarteten Bandqualität, zuverlässig erkennen.

Die Abweichung kann dabei eine oder mehrere verschiedene, aus der erzeugten Defektstatistik bzw. der vorbestimmten Defektstatistik abgeleitete statistische Größen oder Momente betreffen. Eine Abweichung kann beispielsweise bezüglich eines Mittelwerts, einer Standardabweichung oder Varianz und/oder dergleichen bestehen.

In einer weiteren bevorzugten Ausführungsform wird die vorbestimmte Defektstatistik in einem Produktionszyklus unmittelbar nach einer Kalibrierung einer Produktionslinie, in welcher die Metallbänder oder die entsprechenden Vorprodukte produziert werden, erzeugt. Die vorbestimmte Defektstatistik kann so einen "Gutzustand" oder "Optimalzustand" definieren.

Gemäß einem zweiten Aspekt der Erfindung weist die Vorrichtung zur Überwachung einer Metallbandproduktion auf: i) ein Detektionssystem, welches zum Detektieren von Oberflächendefekten auf mehreren während eines Produktionszyklus, insbesondere aufeinanderfolgend, produzierten Metallbändern oder entsprechenden Vorprodukten, insbesondere während der laufenden Produktion, eingerichtet ist; ii) ein Statistikmodul, welches zum Erzeugen einer Defektstatistik für diesen Produktionszyklus auf Grundlage der detektierten Oberflächendefekte eingerichtet ist; iii) ein Prüfmodul, welches zum Prüfen, ob die erzeugte Defektstatistik ein vorbestimmtes Kriterium erfüllt, eingerichtet ist; und iv) eine Schnittstelle zum Ausgeben einer Qualitätsinformation in Abhängigkeit eines Ergebnisses der Prüfung.

Mit einer solchen Vorrichtung lassen sich Änderung in der Qualität produzierter Metallbänder automatisch erkennen. So können bereits frühzeitig Maßnahmen ergriffen werden, wenn sich herausstellt, dass die Qualität der produzierten Metallbänder abnimmt. Infolgedessen lässt sich vermeiden, dass möglichst unnötig viele Metallbänder, welche vorbestimmte Qualitätsanforderungen, insbesondere eine vorbestimmte Oberflächenqualität, nicht erfüllen, produziert werden.

Das Detektionssystem umfasst vorzugsweise wenigstens einen Sensor, insbesondere eine Kamera, und ein Verarbeitungsmodul zur Verarbeitung oder Auswertung der von dem Sensor erzeugten Sensordaten, zum Beispiel der mittels der Kamera aufgenommenen Bilder. Das Verarbeitungsmodul ist dabei zweckmäßigerweise dazu eingerichtet, Oberflächendefekte auf den aufgenommenen Bildern zu erkennen und zu klassifizieren. Das Verarbeitungsmodul kann also jeden gefundenen Defekt einer Defektfamilie zuordnen. Das Verarbeitungsmodul kann beispielsweise unterscheiden, ob das Metallband eingerissen ist, ein Loch oder eine andere Vertiefung aufweist, gewellt ist oder sich Wassertropfen auf dem Metallband oder dem Vorprodukt befinden.

Im Statistikmodul werden diese für jedes Metallband detektierten Oberflächendefekte zweckmäßigerweise in der Defektstatistik zusammengefasst, zum Beispiel aufsummiert. Das Statistikmodul ist vorzugsweise auch zum Vergleichen der erzeugten Defektstatistik mit einer vorbestimmten Defektstatistik eingerichtet. Dazu kann das Statistikmodul zum Beispiel auf eine in einem Speicher gespeicherte vorbestimmte Defektstatistik zugreifen. Gegebenenfalls kann das Statistikmodul, zum Beispiel bei Inbetriebnahme der Produktionslinie oder nach einer Kalibrierung der maßgeblichen Anlagenkomponenten, zur Erzeugung der vorbestimmten Defektstatistik eingerichtet sein.

Ein Modul im Sinne der vorliegenden Erfindung kann hard- und/oder softwaretechnisch ausgebildet sein. Das Modul kann insbesondere eine, vorzugsweise mit einem Speicher-und/oder Bussystem daten- bzw. signalverbundene, Verarbeitungseinheit aufweisen. Beispielsweise kann das Modul eine Mikroprozessoreinheit (CPU) und/oder ein oder mehrere Programme oder Programmmodule aufweisen. Das Modul kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren zumindest teilweise verkörpert bzw. auszuführen imstande ist, so dass das Modul zumindest einen Teil der Schritte solcher Verfahren ausführen kann und damit insbesondere die Metallbandproduktion überwachen kann.

Gemäß einem dritten Aspekt der Erfindung weist die Produktionslinie, insbesondere die Gießwalzanlage, eine Vorrichtung gemäß dem zweiten Aspekt der Erfindung auf.

Unter einer Produktionslinie im Sinne der Erfindung ist vorzugsweise eine Anlage zu verstehen, in der ein Metallband erzeugt, z. B. aus einem gegossenen Strang gewalzt, oder ein bereits erzeugtes Metallband weiterverarbeitet wird. Eine Produktionslinie kann entsprechend eine Gießanlage, eine Warmwalzanlage oder einer Gießwalzanlage sein. Bei einer Produktionslinie kann es sich aber auch um eine Beiz- und Veredelungsanlage, etwa einer Wärmebehandlungs-, Verzinkungs- oder Farbbeschichtungsanlage, handeln.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- FIG 1: ein Beispiel einer Produktionslinie mit einer Vorrichtung zur Überwachung der Metallbandproduktion; und
- FIG 2: ein Beispiel für die Erzeugung einer Defektstatistik.

Soweit zweckdienlich, werden in den Figuren dieselben Bezugszeichen für dieselben oder einander entsprechende Elemente der Erfindung verwendet.

### Beschreibung der Ausführungsformen

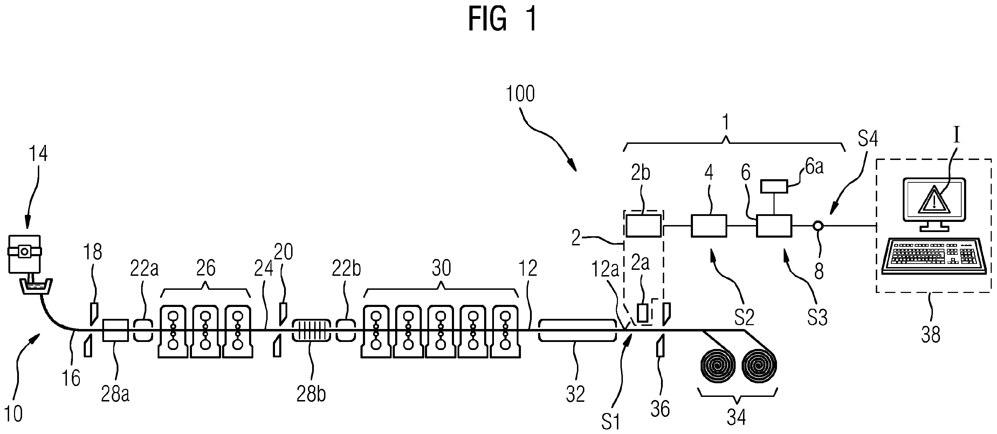

FIG 1 zeigt ein Beispiel einer als Gießwalzanlage ausgebildeten Produktionslinie 10 zur Produktion von auch als Warmband bezeichnetem Metallband 12. Die Produktionslinie 10 umfasst eine Gießmaschine 14, Trennvorrichtungen 18, 20, 36, Entzunderungsvorrichtungen 22a, 22b, eine erste Walzgerüstgruppe 26 mit rein beispielhaft drei Walzgerüsten, Heizvorrichtungen 28a, 28b, eine zweite Walzgerüstgruppe 30 mit rein beispielhaft fünf Walzgerüsten, eine Kühlstrecke 32 und eine Haspelanordnung 34. Die Produktionsanlage 10 kann mittels eines Steuerungssystems 38 gesteuert werden. Am Ende der Produktionslinie 10, d. h. im Bereich der Trennvorrichtung 36 und/oder der Haspelanordnung 34, weist die Produktionslinie 10 eine Vorrichtung 1 zur Überwachung der Metallbandproduktion in der Produktionslinie 10 auf. Die Vorrichtung 1 umfasst ein Detektionssystem 2, ein Statistikmodul 4, ein Prüfmodul 6, einen Speicher 6a sowie eine Schnittstelle 8, über welche die Vorrichtung 1 mit dem Steuerungssystem 38 verbunden ist.

Im Betrieb der Produktionslinie 10 wird mittels der Gießmaschine 14 aus flüssigem Metall ein Metallstrang 16 gegossen, der mittels der Heizvorrichtung 28a aufgeheizt, mittels der Entzunderungsvorrichtung 22a entzundert und in einem ersten, auch als Endlosproduktion bezeichneten Betriebsmodus direkt in der ersten Walzgerüstgruppe 26 zu einem Vorband 24 gewalzt wird. Alternativ können in einem zweiten, auch als Batchbetrieb bezeichneten Betriebsmodus mittels der Trennvorrichtung 18 Brammen vom Metallstrang 16 abgetrennt und anschließend erwärmt, entzundert und gewalzt werden. Das (kontinuierlich oder aus den Brammen gewalzte) Vorband 24 kann dann mittels der Heizvorrichtung 28b erneut erwärmt und mittels der Entzunderungsvorrichtung 22b entzundert werden, bevor es in der zweiten Walzgerüstgruppe 30 zum Metallband 12 mit einer gewünschten Enddicke gewalzt wird. Das Metallband 12 kann dann beim Durchlaufen der Kühlstrecke 32 auf eine zum Aufhaspeln mittels der Haspelanordnung 34 geeignete Temperatur abgekühlt werden. Wenn sich aus einem Vorband 24 mehrere Metallbänder 12 herstellen lassen, z. B. im Endlosbetrieb oder beim Abtrennen von entsprechend langen Brammen vom Metallstrang 16, kann das aufgehaspelte Metallband 12 mittels der Trennvorrichtung 36 vom nachfolgenden Metallband 12 abgetrennt werden. So lassen sich in einem Produktionszyklus mehrere Metallbänder 12 produzieren. Da die Walzspalte in den Walzgerüsten der Walzgerüstgruppen 26, 30 zwischen dem Walzen aufeinanderfolgender Brammen oder sogar im laufenden Betrieb ein- bzw. umgestellt werden können, lassen sich gegebenenfalls auch Metallbänder mit unterschiedlichen Dicken und infolgedessen unterschiedlicher Länge innerhalb eines Produktionszyklus produzieren.

Die Trennvorrichtung 20 zwischen der ersten und zweiten Walzgerüstgruppe 26, 30 kann zur Entkopplung der beiden Walzgerüstgruppen 26, 30 z. B. bei einer Betriebsstörung, etwa einem Hochgeher im Bereich der zweiten Walzgerüstgruppe 30 oder der Haspelanordnung 34, genutzt werden.

Die Qualität der so erzeugen Metallbänder 12 lässt sich, insbesondere unabhängig vom Betriebsmodus der Produktionslinie 10, mittels der Vorrichtung 1 überwachen. Hierzu wird zweckmäßigerweise ein Verfahren 100 zur Überwachung der Metallbandproduktion durchgeführt. Dazu detektiert das Detektionssystem 2 in einem Verfahrensschritt S1 Oberflächendefekte von mehreren, in einem Produktionszyklus produzierten Metallbändern 12. Das Detektionssystem 2 weist zu diesem Zweck vorzugsweise eine Sensorvorrichtung 2a auf, mit der eine Oberfläche 12a des Metallbands 12, vorliegend rein beispielhaft auf der Oberseite, erfasst werden kann. Die Sensorvorrichtung 2a kann zum Beispiel als Kamera ausgebildet sein, die, vorzugsweise im Wesentlichen kontinuierlich, Bilder der Metallbandoberfläche 12a aufnimmt. Diese Bilder können dann von einer Verarbeitungseinheit 2b verarbeitet, insbesondere analysiert bzw. ausgewertet, werden. Die Verarbeitungseinheit 2b ist vorzugsweise Teil des Detektionssystems 2. Bei dem Detektionssystem 2 kann es sich zum Beispiel um ein bereits bestehendes Oberflächeninspektionsgerät handeln.

Neben einem bloßen erkennen von Oberflächendefekten kann das Detektionssystem 2, insbesondere die Verarbeitungseinheit 2b, die gefundenen Oberflächendefekte vorzugsweise auch klassifizieren, d. h. einem Defekttyp (zum Beispiel Riss, Vertiefung, Welle oder Fremdkörper) zuordnen.

In einem weiteren Verfahrensschritt S2 kann das Statistikmodul 4 eine Defektstatistik für den gegenwärtigen Produktionszyklus auf Grundlage der detektierten Oberflächendefekte erzeugen. Das Statistikmodul 4 kann beispielsweise zählen, wie oft ein bestimmter Defekttyp auftritt und/oder an welcher Position auf den Metallbändern 12 diese Defekte auftreten. Gegebenenfalls kann die vom Statistikmodul 4 erzeugte Defektstatistik auch eine Information darüber enthalten, wie schwer die jeweiligen Defekte sind, d. h. wie stark ausgeprägt.

Die so erzeugte Defektstatistik kann im Folgenden einer Prüfung unterzogen werden, anhand der sich letztlich eine Aussage über die (Oberflächen-) Qualität der produzierten Metallbänder 12 ableiten lässt. In einem Verfahrensschritt S3 kann das Prüfmodul 6 daher prüfen, ob die erzeugte Defektstatistik ein vorbestimmtes Kriterium erfüllt. Zu diesem Zweck kann das Prüfmodul 6 eine vorbestimmte, auch als Referenzstatistik bezeichnete Defektstatistik aus einem Speicher 6b laden und mit der erzeugten Defektstatistik für den gegenwärtigen Produktionszyklus vergleichen. Das vorbestimmte Kriterium kann beispielsweise erfüllt sein, wenn eine Abweichung der erzeugten Defektstatistik von der vorbestimmten Defekt- oder Referenzstatistik kleiner ist als ein vorbestimmter Schwellenwert. Ist dies der Fall, kann von einer gewünschten, effektiv durch die vorbestimmte Defektstatistik vorgegebenen (Oberflächen-) Qualität der produzierten Metallbänder ausgegangen werden.

Im Detail kann zum Beispiel geprüft werden, ob und/oder wie stark aus der erzeugten Defektstatistik und der vorbestimmten Defektstatistik abgeleitete statistische Größen, zum Beispiel statistische Momente wie der Mittelwert, eine Standardabweichung und/oder dergleichen, voneinander abweichen. Abhängig von einem Ergebnis dieser Prüfung wird dann in einem weiteren Verfahrensschritt S4 über die Schnittstelle 8 eine Qualitätsinformation I ausgegeben. Beispielsweise kann die Abweichung bzw. ein Maß für die ermittelte Abweichung ausgegeben werden. Gegebenenfalls kann die Qualitätsinformation I auch ein Warnsignal enthalten oder ein solches Warnsignal sein, zum Beispiel wenn die erzeugte Defektstatistik das vorbestimmte Kriterium nicht erfüllt, etwa wenn die Abweichung zwischen der erzeugten Defektstatistik und der vorbestimmten Defektstatistik den vorbestimmten Schwellenwert erreicht oder überschreitet.

Bei der Schnittstelle 8 kann es sich um eine software- oder hardwaretechnisch ausgebildete Schnittstelle handeln. Es ist zum Beispiel denkbar, dass die Qualitätsinformation I über eine als Bildschirm, Lautsprecher und/oder dergleichen ausgebildete Schnittstelle 8 direkt an Bedienpersonal der Produktionslinie 10 ausgegeben wird. Alternativ oder zusätzlich kann die Qualitätsinformation I aber, wie in FIG 1 dargestellt, über eine Softwareschnittstelle 8 an eine Datenverarbeitungsanlage, zum Beispiel das Steuerungssystem 38, ausgegeben werden. Dadurch kann die Qualitätsinformation I, insbesondere ein Warnsignal, direkt in einem Leitstand ausgegeben werden, sodass das Bedienpersonal schon frühzeitig auf zum Beispiel eine ansteigende Defekthäufigkeit reagieren kann. Grundsätzlich ist es sogar denkbar, dass das Steuerungssystem 38 selbstständig auf Grundlage der über die Schnittstelle 8 bereitgestellten Qualitätsinformation I den Produktionsprozess anpasst.

Grundsätzlich lässt sich die voranstehend beschriebene Art der Überwachung auch durchführen, wenn das Detektionssystem 2 in einem anderen Abschnitt der Produktionslinie 10 angeordnet ist. Das Detektionssystem 2 kann beispielsweise auch unmittelbar stromabwärts der zweiten Walzgerüstgruppe 30, d. h. noch vor der Kühlstrecke 32, oder sogar zwischen der ersten und zweiten Walzgerüstgruppe 26, 30 angeordnet sein. Im letztgenannten Fall können damit Oberflächendefekte von Vorprodukten der Metallbänder 12, also der Vorbänder 24, detektiert werden. Oberflächendefekte in solchen Vorprodukten, d. h. im Vorband 24, können aber ebenfalls einen Einfluss auf die Qualität des Endprodukts, also des Warm- oder Metallbands 12, haben.

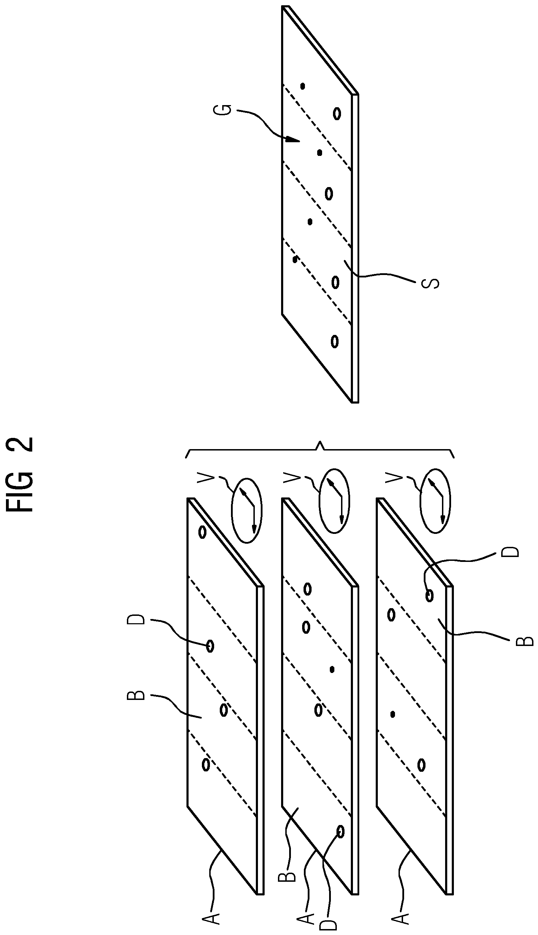

FIG 2 zeigt ein Beispiel eine Erzeugung einer Defektstatistik S auf Grundlage der Detektion von Oberflächendefekten D auf mehreren während eines Produktionszyklus produzierten Metallbändern 12.

Bei der Detektion der Oberflächendefekte D, von denen aus Gründen der Übersichtlichkeit nur wenige mit einem Bezugszeichen versehen sind, wird zweckmäßigerweise auf Sensordaten zurückgegriffen, die von einer Sensorvorrichtung (Bezugszeichen 2a in FIG 1) beim Erfassen der Metallbandoberfläche erzeugt werden. Solche Sensordaten können zum Beispiel in Form von Bildern B der Bandoberfläche vorliegen, die von einer als Kamera ausgebildeten Sensorvorrichtung aufgenommenen werden. In FIG 2 sind zur Illustration mehrere solcher Bilder B zu einem Abbild A des jeweiligen Metallbands zusammengefasst.

Bei der Auswertung der Bilder B oder der Abbildungen A, zum Beispiel mittels einer entsprechenden Verarbeitungseinheit (Bezugszeichen 2b in FIG 1), können die Oberflächendefekte D identifiziert und gegebenenfalls auch kategorisiert werden. Zweckmäßigerweise wird dabei für jeden gefundenen Defekt D auch dessen Lage auf dem Metallband ermittelt, zum Beispiel sein Abstand relativ zum Bandanfang und/oder zu den Längsseiten bzw. zur Bandmitte. Effektiv kann so für jedes Metallband eine Defektverteilung V ermittelt werden, zum Beispiel in Form eines Datensatzes, in dem jedem gefundenen Oberflächendefekt D dessen Position auf dem jeweiligen Metallband zugeordnet ist.

Um diese Defektverteilungen V zu erhalten, ist es grundsätzlich denkbar, jedes einzelne Bild B einzeln zu analysieren, d. h. zum Beispiel die die Effekte D auf jedem einzelnen Bild B ortsaufgelöst zu detektieren, und die Analyseergebnisse anschließend zur Defektverteilung V zusammenzufassen. Alternativ können die einzelnen Bilder B auch, wie in FIG°2 gezeigt, zu den Abbildungen A des jeweiligen Metallbands zusammengefasst und dann alle Defekte D auf diesen Abbildungen A ermittelt werden.

Die Defektstatistik S kann dann zum Beispiel durch einfaches Aufsummieren von während des Produktionszyklus ermittelten Defektverteilungen V erzeugt werden. Die Defektstatistik S liefert somit eine Information, an welchen Stellen des Metallbands Oberflächendefekte D vorliegen und wie häufig sie dort auftreten. Die Defektstatistik S umfasst also eine Defektdichte G, d. h. eine (räumliche) Verteilung der Defekthäufigkeit. Anhand einer solchen Defektstatistik S können auch über einen langen Betriebszeitraum auftretende, schleichende Änderungen der Band(oberflächen)qualität festgestellt werden, zum Beispiel durch einen Vergleich mit einer Referenzstatistik, welche die Defektdichte in einem kalibrierten Zustand der verwendeten Produktionslinie beschreibt. Dadurch lässt sich gegebenenfalls die unnötige Produktion einer Vielzahl von Metallbändern mit unzureichender Oberflächenqualität verhindern. Darüber hinaus können so auch Häufungen von Oberflächendefekten in bestimmten Bandabschnitten, d. h. Inhomogenitäten in der Defektverteilung, festgestellt werden, die bei Betrachtung einzelner Bänder nicht auffallen würden.

Es ist dabei nicht zwingend nötig, dass zum Erzeugen der Defektstatistik S alle während des Produktionszyklus detektierten Oberflächendefekte D berücksichtigt werden. Die Defektstatistik kann sich beispielsweise auch auf lediglich eine ausgewählte Kategorie von Oberflächendefekten D beziehen. Alternativ oder zusätzlich können auch nur die detektierten Oberflächendefekte D einer vorbestimmten Anzahl von innerhalb des Produktionszyklus produzierten Metallbändern berücksichtigt werden. So kann beispielsweise nur jedes zweite oder dritte Metallband oder, verallgemeinert, nur jedes n-te Metallband mit n > 2 zum Erzeugen der Defektstatistik S herangezogen werden. Ebenso ist es denkbar, dass in der Defektstatistik immer nur die aktuellsten Metallbänder, z. B. die N zuletzt produzierten Bänder mit N > 10, berücksichtigt werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Vorrichtung
- 2: Detektionssystem
- 2a: Sensorvorrichtung
- 2b: Verarbeitungseinheit
- 4: Statistikmodul
- 6: Prüfmodul
- 6a: Speicher
- 8: Schnittstelle
- 10: Produktionslinie
- 12: Metallband
- 12a: Oberfläche
- 14: Gießmaschine
- 16: Metallstrang
- 18: Trennvorrichtung
- 20: Trennvorrichtung
- 22a, 22b: Entzunderungsvorrichtung
- 24: Vorband
- 26: erste Walzgerüstgruppe
- 28a, 28b: Heizvorrichtung
- 30: zweite Walzgerüstgruppe
- 32: Kühlstrecke
- 34: Haspelanordnung
- 36: Trennvorrichtung
- 38: Steuerungssystem

- 100: Verfahren
- S1: Oberflächendefekte detektieren
- S2: Defektstatistik erzeugen
- S3: Defektstatistik vergleichen
- S4: Qualitätsinformation ausgeben

- I: Qualitätsinformation
- A: Abbild
- B: Bild
- D: Oberflächendefekt
- V: Defektverteilung
- S: Defektstatistik
- G: Defektdichte

## Patentansprüche

1. Verfahren (100) zur Überwachung einer Metallbandproduktion, mit den Schritten:
- Detektieren (S1) von Oberflächendefekten (D) mehrerer während eines Produktionszyklus produzierten Metallbänder (12) oder entsprechender Vorprodukte (24);
- Erzeugen (S2) einer Defektstatistik (S) für diesen Produktionszyklus auf Grundlage der detektierten Oberflächendefekte (D); und
- Ausgeben (S4) einer auf der erzeugten Defektstatistik (D) basierenden Qualitätsinformation (I).

2. Verfahren nach Anspruch 1, wobei geprüft wird (S3), ob die erzeugte Defektstatistik (S) ein vorbestimmtes Kriterium erfüllt und die Qualitätsinformation (I) in Abhängigkeit eines Ergebnisses der Prüfung ausgegeben wird.

3. Verfahren (100) nach Anspruch 1 oder 2, wobei für jedes der während des Produktionszyklus produzierten Metallbänder (12) oder entsprechenden Vorprodukte (24) auf Grundlage der jeweils detektieren Oberflächendefekte (D) eine Defektverteilung (V) ermittelt und aus diesen Defektverteilungen (V) die Defektstatistik (S) gebildet wird.

4. Verfahren (100) nach Anspruch 3, wobei die ermittelten Defektverteilungen (V) auf eine vorbestimmte Bandgröße normiert werden.

5. Verfahren (100) nach einem der vorangehenden Ansprüche, wobei der Produktionszyklus die Produktion von etwa 10 bis etwa 1000 Metallbändern (12) umfasst.

6. Verfahren (100) nach einem der vorangehenden Ansprüche, wobei die erzeugte Defektstatistik (S) eine räumliche Defektdichte (G) umfasst und im Rahmen der Prüfung geprüft wird, ob die Defektdichte (G) einen vorbestimmten Schwellenwert an wenigstens einer Bandposition erreicht oder überschreitet.

7. Verfahren (100) nach einem der vorangehenden Ansprüche, wobei die erzeugte Defektstatistik (S) im Rahmen der Prüfung mit einer vorbestimmten Defektstatistik verglichen wird.

8. Verfahren (100) nach Anspruch 7, wobei die Qualitätsinformation (I) in Abhängigkeit einer Abweichung der erzeugten Defektstatistik (S) von der vorbestimmten Defektstatistik ausgegeben wird.

9. Verfahren (100) nach einem der Ansprüche 7 oder 8, wobei die vorbestimmte Defektstatistik in einem Produktionszyklus unmittelbar nach einer Kalibrierung einer Produktionslinie (10), mit welcher die Metallbänder (12) oder die entsprechenden Vorprodukte (24) produziert werden, erzeugt wird.

10. Vorrichtung (1) zur Überwachung einer Metallbandproduktion, mit
- einem Detektionssytem (2), eingerichtet zum Detektieren von Oberflächendefekten (D) mehrerer während eines Produktionszyklus produzierten Metallbänder (12) oder entsprechender Vorprodukte (24),
- einem Statistikmodul (4), eingerichtet zum Erzeugen einer Defektstatistik (S) für diesen Produktionszyklus auf Grundlage der detektierten Oberflächendefekte (D), und
- einer Schnittstelle (8) zum Ausgeben einer auf der erzeugten Defektstatistik (S) basierenden Qualitätsinformation (I) in Abhängigkeit eines Ergebnisses der Prüfung.

11. Produktionslinie (10), insbesondere Gießwalzanlage, mit einer Vorrichtung (1) nach Anspruch 10.
